# EUROPÄISCHE PATENTSCHRIFT

(11) **EP 0 249 889 B1**
(45) Veröffentlichungstag und Bekanntmachung des Hinweises auf die Patenterteilung: **11.10.1995**
(21) Anmeldenummer: 87108437.2
(22) Anmeldetag: 11.06.1987
(51) Int. Cl.: E06B 1/26, E06B 3/20, B29C 51/12

(54) **Verfahren zur Herstellung eines Rahmens und Rahmen**
Method for the production of a frame and frame
Méthode pour la fabrication d'un cadre et cadre

(30) Priorität: 16.06.1986 DE 3620192
(43) Veröffentlichungstag der Anmeldung: 23.12.1987
(73) Patentinhaber: Weiss, Albert, D-74747 Ravenstein (DE)
(72) Erfinder: Weiss, Albert, D-74747 Ravenstein (DE)
(74) Vertreter: Canzler, Rolf, Dipl.-Ing.

(56) Entgegenhaltungen:
- CH-A- 489 689
- DE-C- 1 120 125
- DE-U- 1 885 053
- GB-A- 594 664
- US-A- 4 485 590

## Beschreibung

Die Erfindung betrifft ein Verfahren zur Herstellung eines Rahmens für Fenster, Türen oder dergleichen gemäß dem Oberbegriff des Anspruches 1.

Wohnwagen, Mobil-Homes oder ähnliche Unterkünfte werden in leichter, dünnwandiger Bauweise gefertigt. Dennoch müssen die Bauelemente stabil und für große Unterschiede zwischen Innen- und Außentemperatur geeignet sein, da diese Unterkünfte auch im Winter benutzt werden.

Hierzu werden Rahmen, Halterungen und andere Bauteile üblicher Weise unter Verwendung von Aluminium und Kunststoff hergestellt.

Bei der Verwendung von Aluminium entsteht insbesondere im Fensterbereich unerwünschtes Schwitzwasser. Sowohl bei Aluminium als auch Kunststoff ist eine Luftdurchlässigkeit nicht gegeben, Teile aus Kunststoff benötigen zudem teure Werkzeuge zur Herstellung, die nur bei großen Stückzahlen amortisiert werden können.

Es ist bereits ein Rahmen bekannt (GB-A-594664), dessen Schenkel einen profilierten Querschnitt aufweisen und der aus einem mit einem Härter ausgerüsteten Vliesstoffmaterial gepreßt ist.

Das Vliesstoffmaterial wird in Streifen geschnitten und aufeinander gelegt, wobei an den Ecken oder anderen Stellen, wo eine Verstärkung gewünscht wird, Lagen übereinander gelegt sind. Bevor aber das Material in die Form zum Pressen eingelegt werden kann, muß es getrocknet werden, damit es nicht in der Form anhaftet.

Es hat sich gezeigt, daß durch das für derartige Zwecke zur Verfügung stehende Bindermaterial auch während des Pressens, insbesondere bei der für das Aushärten erforderlichen Temperatur ein Anhaften an der Form erfolgt, sodaß es außerordentlich schwierig oder auch unmöglich ist, das Werkstück nach dem Pressen aus der Form zu nehmen, ohne es zu beschädigen oder zu deformieren. Es müssen besondere Maßnahmen getroffen werden. Beispielsweise muß der Rahmen noch in heißem Zustand und vor vollständiger Aushärtung aus der Form genommen werden. Folglich muß eine Ablage für die Werkstücke geschaffen werden, wo diese ohne Deformation vollständig aushärten und abkühlen können. Alle diese Maßnahmen sind nicht nur aufwendig und erschweren die Herstellung, sondern machen eine industrielle Serienfertigung praktisch unmöglich.

Es ist ferner bekannt, einen profilierten Rahmen aus einem ausgehärteten vorfabrizierten Kern aus Schaumstoff herzustellen, indem eine mit Kunstharz getränkte Glasmatte den Kern umgibt oder der Kern nach Bestreichen mit Kunstharz mit einer trockenen Glasmatte umgeben wird (DE-U-1885053), wobei die Glasmatte ganz in den Kunststoff eingelagert wird. Um ein Ankleben zu verhindern, werden vor dem Einlegen des Formlings die Forminnenwände zur Erzeugung einer Schutzschicht mit Silikonöl bestrichen oder übersprüht. Hierfür ist stets ein zusätzlicher Arbeitsgang zur Vorbereitung der Form erforderlich, wobei nur eine sorgfältige Beschichtung tatsächlich ein Ankleben und damit Ausschuß verhindert.

Es wurde auch schon vorgeschlagen (CH-A-489689), bei als Hohlkörper ausgebildeten Rahmen für Fenster, Türen und dergleichen ein Ankleben am Kern dadurch zu verhindern, daß an der Innenseite der das Hohlprofil erzeugenden, mit Kunststoff getränkten Glasfaserstreifen Beilagen aus am Kern nicht haftendem Material eingelegt werden, die das Kleben des Kunststoffes am Kern verhindern sollen. Diese Schutzschicht ist verlorenes Material und muß nach dem Preßvorgang vom Kern, Form und Werkstück entfernt werden. Dies ist aufwendig und umständlich für die Herstellung.

Der Erfindung liegt die Aufgabe zugrunde, ein Verfahren und eine Vorrichtung zur Durchführung des Verfahrens der genannten Art zu verbessern und auch für eine industrielle Serienfertigung geeignet und wirtschaftlich zu machen.

Diese Aufgabe wird erfindungsgemäß durch die kennzeichnenden Merkmale des Anspruchs 1 gelöst.

Durch das Einlegen eines Trennvlieses oder einer Web- oder Strickstoffbahn werden die oben genannten Nachteile vermieden. Der Rahmen kann auf einfache und wirtschaftliche Weise an die verschiedenen Festigkeitserfordernisse angepaßt werden. Die besonderen Vorteile des erfindungsgemäßen Herstellungsverfahrens liegen in der höheren Produktionssicherheit und Reduzierung des Ausschusses und lassen sich wie folgt zusammenfassen:
- Materialeinsparung von 50% und mehr
- Einfacherer und damit kostengünstiger und flexibler Werkzeugbau
- Verkürzung der Rüstzeiten und damit hoher Auslastungsgrad
- Herstellung auch kleinerer Serien durch variable Werkzeuge noch wirtschaftlich
- Verbesserte Temperatursteuerung und dadurch höhere Produktionssicherheit und Reduzierung des Ausschusses.
- Kostengünstige Produktion durch Wegfall mehrerer Arbeitsgänge (ein Werkzeug für Aushärtung, Kaschierung und Beschneidung).

Durch die Merkmale des Anspruch 10 wird die Form der jeweiligen Rahmengröße angepaßt und damit im Baukastensystem variiert. Es sind zwar mehrteilige Formen bereits bekannt (DE-C-1120125), jedoch weisen diese bekannten Formen keine kompletten Eckteile auf. Dadurch wird das Zusammensetzen der Form kompliziert und die Ausbildung der Rahmenecken ungenau.

Durch die Merkmale des Anspruchs 11 lassen sich Rahmen in der erfindungsgemäßen Weise sowohl in beliebiger Größe als auch unter Einhaltung der erforderlichen Temperaturen qualitativ und wirtschaftlich in industriellen Serien herstellen.

Durch die Merkmale des Anspruchs 13 wird ein Werkzeug geschaffen, mit welchem sich das erfindungsgemäße Herstellungsverfahren für einen solchen Rahmen wesentlich vereinfacht und selbst die wirtschaftliche Herstellung industrieller Serien ermöglicht.

Ein nach dem erfindungsgemäßen Verfahren hergestellter Rahmen zeichnet sich nicht nur durch geringes Gewicht und Luftdurchlässigkeit aus, sondern er ist bereits fertig, ohne eine Nach- oder Endbehandlung seiner Oberfläche notwendig zu machen. Diese Trennlagen sorgen aber auch dafür, daß die Oberfläche des Rahmens gleichmäßig ist. Ansätze und Überlappungen werden überdeckt. Seine Verdichtung und damit Stabiltät kann auf einfache Weise sowohl insgesamt wie auch über seine Längen variiert werden, sodaß er nicht nur selbst mit dem Objekt verschraubt werden, sondern auch als Träger und Befestigung von Rollos, Fliegenschutz, Vorhangschienen und anderer Teile dienen kann. Sowohl vom Ausgangsmaterial als auch von der Herstellungsweise ist das entstehende Produkt von großer Wirtschaftlichkeit.

Weitere Einzelheiten der Erfindung werden anhand der Zeichnungen erläutert.

Es zeigen
- Fig. 1: die zu einem Rahmengebilde zusammengelegten Streifen aus Vliesstoffmaterial,
- Fig. 2: den erfindungsgemäß hergestellten Rahmen in perspektivischer Ansicht,
- Fig. 3: den Aufbau des Materials im Querschnitt,
- Fig. 4 und 5: einen Teil des Rahmens mit einer Metalleinlage in der Draufsicht und im Querschnitt,
- Fig. 6: eine Formplatte in der Draufsicht,
- Fig. 7: das Formwerkzeug mit dem gepreßten Rahmen im Querschnitt.
- Fig.8: eine Ausführung des Rahmens im Schnitt als Träger für einen Vorhangmechanismus

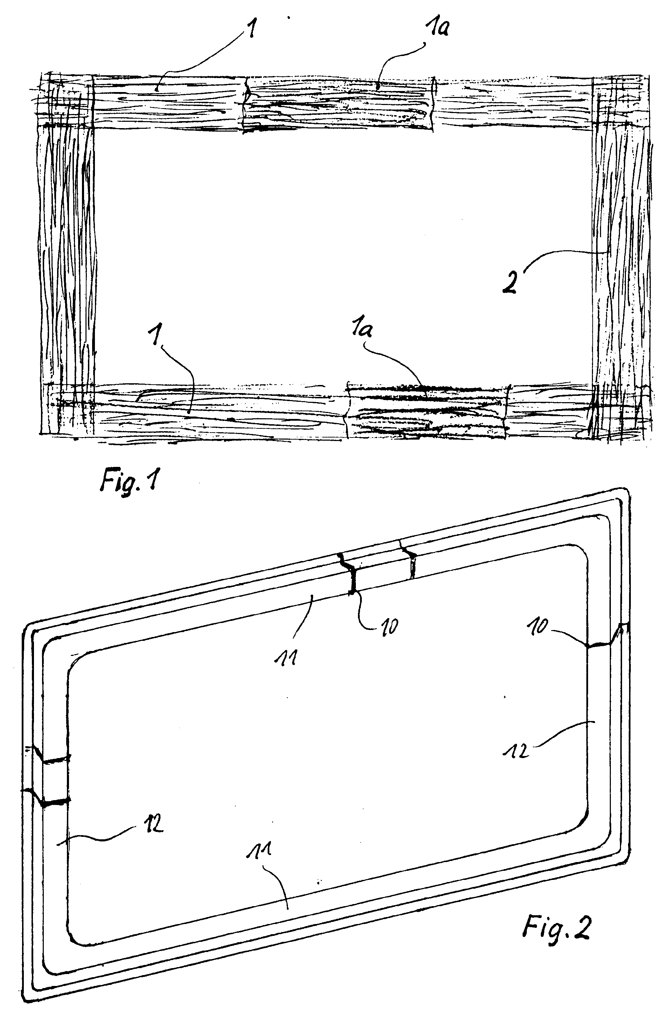

Für das erfindungsgemäße Verfahren wird als Ausgangsmaterial eine Vliesmatte aus Fasermaterial (Baumwolle, Polyester und auch Regenerat verwendet, das mit einem duroplastischen Härter (Kunstharz, z. B. Venylharz oder dergleichen) getränkt ist. Diese 2 bis 3 cm dicke Vliesstoffmatte wird in Streifen 1 und 2 geschnitten, die so breit sind, daß sie die Preßform gut ausfüllen. Die Dicke der Vliesmatte richtet sich nach der gewünschten Rahmendicke und Rahmenfestigkeit. Diese Streifen 1 und 2 werden in die Form zu einem Rahmengebilde zusammengelegt wie in Fig. 1 gezeigt. Dabei überdecken sich an den Ecken die Streifen 1 und 2. An Stellen, an denen eine besondere Dichte und Festigkeit des Rahmens gewünscht wird, können zusätzlich Streifenstücke 1a auf die den Rahmen bildenden Streifen 1 oder 2 aufgelegt werden.

Durch den Preßvorgang wird dann die an den Ecken doppelte Materialstärke oder auch an den Stellen mit zusätzlich aufgelegten Streifenstücken 1a derart verdichtet, daß eine gleichmäßige Dicke erreicht wird. Der Übergang vom doppellagigen zum einfachen Material ist überraschender Weise praktisch nicht erkennbar. Durch die hohe Verdichtung in den Ecken ergibt sich außerdem eine größere Stabilität des Rahmens.

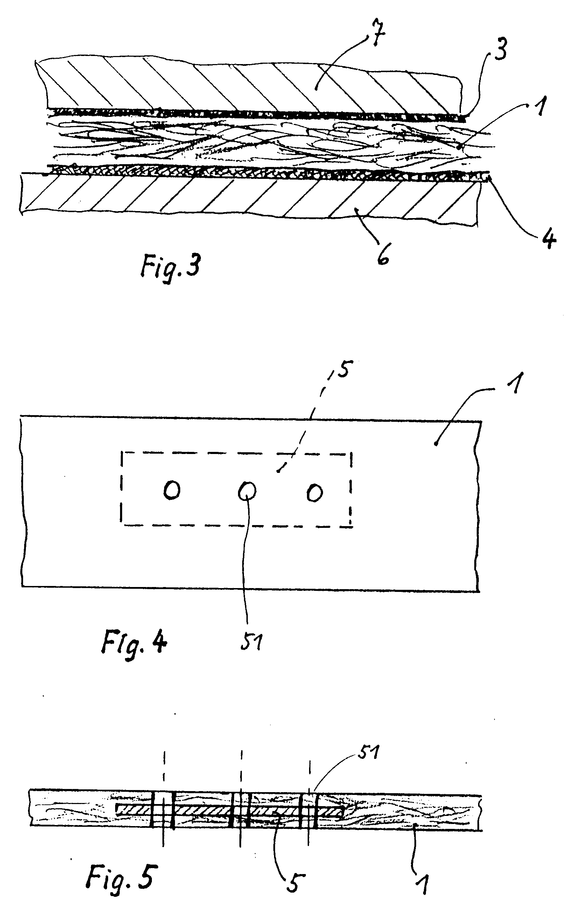

Das Pressen findet bei einer Temperatur von 150 bis 200° C statt, so daß durch den Preßdruck die Vliesstoffstreifen verdichtet und gleichzeitig der Härter durch die Temperatur aktiviert werden. Temperatur und Preßzeit richten sich nach der Art des verwendeten Härters, mit dem die Vliesstoffmatte ausgerüstet ist. Bei dem oben erwähnten Kunstharzhärter und einer Dicke der Vliesstoffmatte von 2 cm beträgt die Reaktionszeit etwa 2,5 Minuten. Nach dieser Zeit kann der fertige Rahmen (Fig. 2) sofort der Form entnommen werden, da er die gewünschte Festigkeit bereits erreicht hat, ohne daß ein Abkühlen notwendig ist. Durch die Verwendung eines solchen duroplastischen Härters erhält der Rahmen eine hohe Temperatur- und Verformbeständigkeit. Der Rahmen weist Schenkel 11 und 12 auf, die einen profilartigen Querschnitt 10 haben, vorgegeben durch die Preßform 6, 7.

Bei sehr starker Pressung kann der Härter aus der Vliesstoffmatte austreten, so daß das gepreßte Teil in der Preßform festklebt. Es hat sich deshalb als zweckmäßig erwiesen, ein Trennvlies 3 zwischen die Vliesstoffmatte 1 und die Form zu legen, welches das Festkleben an der Form verhindert. Hierzu kann ebenfalls Polyester-Fasermaterial dienen oder auch ein hoch verformbares Gewebe oder Gewirke 4 aus Polyester oder einem anderen Rohstoff, der die beim Pressen zur Aktivierung des Härters notwendigen Temperaturen verträgt.

In Fig. 3 ist der Aufbau des Vliesmaterials in der Preßform veranschaulicht. In das Formunterteil 6 ist zunächst ein Gewebe oder Gewirke 4 eingelegt, das anstelle eines Trennvlieses 3 dafür sorgt, daß ein Festkleben des Fertigteiles in der Form nicht erfolgt. Darauf ist die Vliesstoffmatte 1 gelegt, über welche wiederum ein Trennvlies 3 gelegt ist, so daß die Vliesstoffmatte 1 nicht direkt mit dem Formoberteil 7 in Berührung kommt.

Zur Verbindung des Trennvlieses 3 oder auch des Gewebes oder Gestrickes 4 mit der Vliesstoffmatte 1 wird dieses mit einem Haftvermittler ausgerüstet, der auf das Trennvlies 3 bzw. Gewebe 4 aufgestrichen (Paste) oder aufkaschiert wird (perforierte Folie, Gitter, Vlies). Vorzugsweise erfolgt das Aufbringen des Haftvermittlers auf das Trennvlies 3 oder die Stoffbahn 4 durch Vernadeln, weil durch das Einstecken der Nadeln eine luftdurchlässige Perforation geschaffen wird.

Es kann aber auch der Haftvermittler in Form einer perforierten Folie, Vlies oder auch Gitter wie die Vliesstoffmatte 1 in Streifen geschnitten und ohne vorherige Kaschierung als separates Teil mit dem Gewebe 4 bzw. Trennvlies 3 in die Form 6, 7 eingelegt werden. Die Beschickung der Form 6 sieht dann wie folgt aus:
1. Einlegen des Gewebestreifens 4
2. Einlegen des Haftvermittlers in Streifen
3. Einlegen der Vliesstoffmattenstreifen 1
4. Einlegen eines Haftvermittlerstreifens
5. Einlegen des Trennvliesstreifens 3

Die Schritte 1. und 2. können zusammengezogen werden, wenn das Gewebe 4 bereits auf der Rückseite mit einem Haftvermittler versehen ist. Das Gleiche gilt für die Schritte 4. und 5. in analoger Weise.

Die Form 6, 7 wird anschließend geschlossen und der Haftvermittler durch die Temperatur aktiviert, so daß sich die Vliesstoffmatte 1 mit dem Gewebe 4 und dem Trennvlies 3 verbindet. Wichtig ist dabei, daß kein geschlossener Haftfilm, sondern nur eine punktförmige Haftung entsteht, damit die Luftdurchlässigkeit nicht zerstört wird. Besonders geeignet als Haftvermittler, der unter Temperatureinwirkung reagiert, ist Polyäthylen. Es können aber auch andere geeignete Materialien als Haftvermittler verwendet werden.

Das Aufbringen eines Gewebes oder Gestrickes 4 in der oben beschriebenen Weise erfolgt zweckmäßig auf der Außenseite des Rahmens, während das Trennvlies die nicht sichtbare Innenseite bedeckt. Die Schenkel 11 und 12 sind dadurch in einem Arbeitsgang mit Stoff überzogen und der Rahmen erhält ein gewünschtes Aussehen, mit dem er auf die Inneneinrichtung des Wohnwagens abgestimmt ist, ohne noch einer entsprechenden Nachbehandlung zu bedürfen. Es ist allerdings darauf zu achten, daß der Stoff (Gewebe oder Gestrick) an den Ecken nicht überlappt, es sei denn, er ist so ohne Struktur, daß die Lagerichtung nicht erkennbar ist.

Oft ist es erwünscht, Teile der Einrichtung, die verblendet oder verdeckt werden soll, direkt an dem Rahmen zu befestigen oder auch den Rahmen selbst mit Schrauben oder dergleichen zu befestigen. Nach dem erfindungsgemäßen Verfahren werden hierfür in das Vliesstoffmaterial 1 vor dem Pressen Teile 5 aus Metall oder Kunststoff eingelegt, die als Verankerungsteile dienen und je nach Bedarf mit Bohrungen oder Gewindebohrungen 51 versehen sind. Auch hier wird eine allseits glatte Oberfläche des Rahmens nach dem Pressen erzielt.

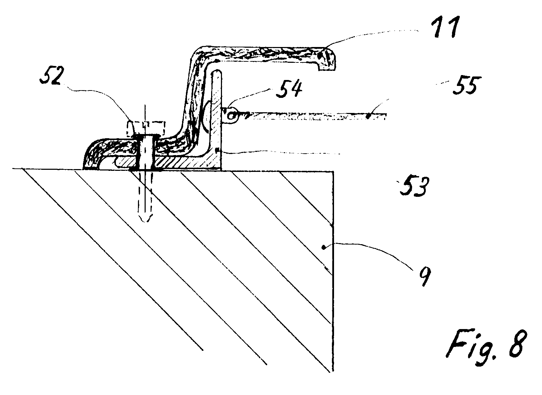

Es hat sich als vorteilhaft erwiesen, insbesondere für die Montage, wenn die Mechanik für Rollos, Fliegenschutz oder auch Vorhangschienen mit dem Rahmen unmittelbar verbunden und so der Rahmen gleichzeitig Träger und Abdeckung ist. Fig.8 zeigt eine solche Ausführung, bei der der Rahmen Träger einer Faltvorhangeinrichtung beispielsweise gemäß der DE-OS 3526745 oder auch der DE-PS 3526744 ist. Der Winkel 53, an dem die Vorhangschiene 55 mit einer öse 54 befestigt ist, ist mit einer in den Rahmenschenkel 11 eingelassenen Nietöse 52 mit dem Rahmen verbunden. Die Nietöse 52 ist hohl, sodaß sie gleichzeitig als Schraubloch für die Befestigung des Rahmens an der Wand 9 dient. Der freie Schenkel des Winkels 53 wird von dem Profilschenkel des Rahmens überdeckt.

In gleicher Weise wie beschrieben können auch die Teile 5 zur Befestigung des Mechanismus und auch zur gleichzeitigen Befestigung des Rahmens an der Wand 9 dienen.

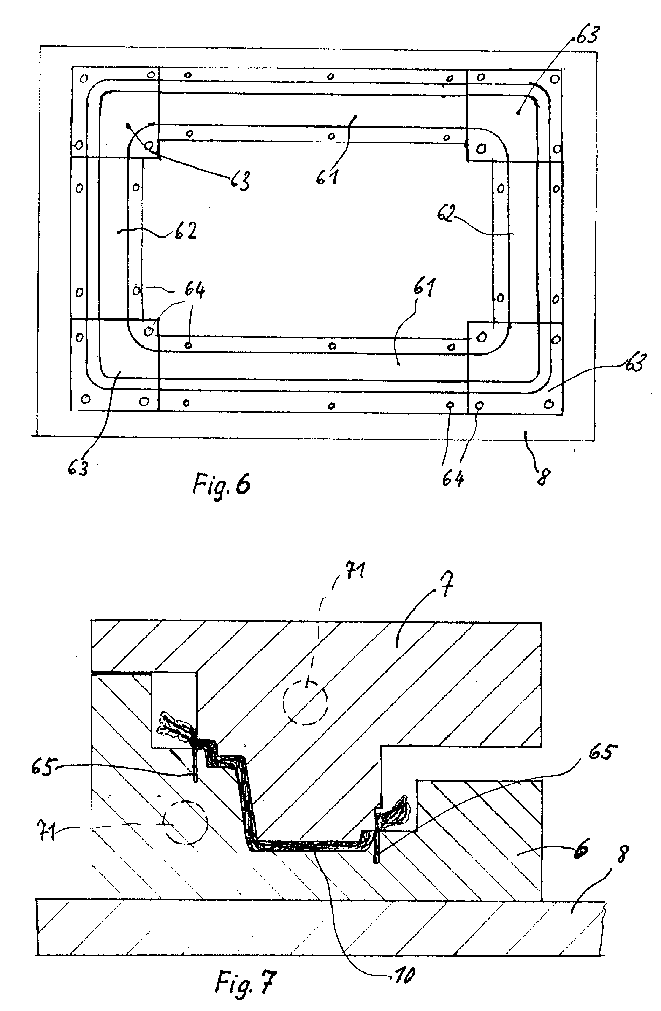

Zur Durchführung des oben beschriebenen Verfahrens wird eine mehrteilige Form 6, 7 verwendet (Fig. 6). Diese besteht aus Eckteilen 63 und Längsteilen 62 und 61. Durch verschiedene Längsteile 61 und 62 kann die Rahmengröße variiert werden. Die Längsteile 61, 62 werden zweckmäßig so dimensioniert, daß die für die verschiedenen Rahmengrößen jeweils benötigten Längen auch aus mehreren Längsteilen 61 oder 62 zusammengesetzt werden können. Die Form ist auf diese Weise nach einem Baukastensystem aus wenigen einheitlichen Basisteilen zusammensetzbar für die jeweils gewünschte Rahmengröße.

Die Teile 61, 62, 63 werden mit Stiften oder Paßschrauben 64 auf einer Grundplatte 8 befestigt, die als Heizplatte ausgebildet ist, um die Formteile 61, 62, 63 auf die erforderliche Temperatur von 150 bis 200° C aufzuheizen. Die sonst üblichen Heizkanäle 71, durch die Öl mit entsprechender Temperatur gepumpt wird, entfallen, so daß auf einfache Weise die Formteile 61, 62, 63 zusammengesetzt werden können. Natürlich ist auch für die Heizplatte 8 eine Temperaturregelung vorgesehen, um die für den Preßvorgang und die Aktivierung des Härters notwendige Temperatur genau einhalten zu können.

Beim Pressen der Streifen 1, 2 wird überstehendes Material im gleichen Arbeitsgang abgeschnitten, so daß nach dem Formprozeß der fertige Rahmen (Fig. 2) der Form 6, 7 entnommen werden kann. An dem Unterteil 6 der Form sind im Bereich der Außenkanten Messer 65 angeordnet oder auch eine in das Formwerkzeug eingearbeitete scharfe Kante vorgesehen, so daß das Material im Bereich der Schnittstelle extrem hoch verdichtet und gleichzeitig abgeschert wird. Es entsteht eine feste und glatte Randkante am Rahmen.

Durch die Verwendung der Heizplattenheizung kann die Form ohne Schwierigkeiten aus einzelnen Teilen 61, 62, 63 zusammengesetzt werden entsprechend der gewünschten Rahmengröße. Bei Verwendung der ölbeheizung müssen an den Stoßstellen die Kanäle jeweils abgedichtet werden, um das Austreten von Öl zu verhindern. Durch die Formherstellung nach dem Baukastenprinzip ist es erstmals möglich, auch relativ kleine Produktionsserien, die wegen der hohen Werkzeugkosten nicht wirtschaftlich wären, kostengünstig herzustellen.

Die Erfindung ist anhand eines Rahmens beschrieben. Sie ist jedoch nicht auf-die Herstellung von Rahmen für Fenster, insbesondere Wohnwagenfenster, beschränkt, sondern kann mit gleichem Vorteil zur Herstellung von jeglichen rahmenartigen Teilen angewendet werden, wie z. B. für Verkleidungen an Dachfenstern, Türen, Fensterzügen und anderem. Die Herstellung des Rahmens kann auch in der Weise erfolgen, daß der Rahmen als ganzes aus einer Vliesstoffmaterialplatte herausgestanzt und gepreßt wird, jedoch ist dann der Materialverbrauch höher.

## Patentansprüche

1. Verfahren zur Herstellung eines Rahmens für Fenster, Türen oder dergleichen aus mit einem Härter ausgerüstetem Vliesstoffmaterial, das in Streifen entsprechend den Abmessungen des Rahmens geschnitten und in eine Form zu dem gewünschten Rahmen zusammengelegt wird, wobei die Vliesstoffmaterialstreifen sich an den Ecken überlappen, dieses so zusammengefügte Rahmengebilde unter Wärmeeinwirkung durch Pressen derart verdichtet wird, daß an den Stellen mit zusätzlich aufgelegten Streifenstücken eine gleichmäßige Dicke des Rahmens erreicht wird, **dadurch gekennzeichnet**, daß zwischen die Vliesstoffmaterialstreifen (1, 2) und der Form (6, 7) ein Trennvlies (3) eingelegt wird, das das Festkleben an der Form verhindert, aber mit den Vliesstoffmaterialstreifen verbunden wird.

2. Verfahren nach Anspruch 1, **dadurch gekennzeichnet,** daß als Trennvlies (3) eine verformbare Web- oder Strickstoffbahn (4) zwischen die Vliesstoffmaterialstreifen (1, 2) und der Form (6, 7) eingelegt wird.

3. Verfahren nach Anspruch 1 oder 2, **dadurch gekennzeichnet,** daß an beliebigen Stellen zur Verstärkung des Rahmens zusätzlich Vliesstoffstreifen (1a) aufgelegt werden.

4. Verfahren nach einem oder mehreren der Ansprüche 1 bis 3, **dadurch gekennzeichnet**, daß in das Vliesstoffmaterial (1, 2) vor dem Pressen Teile (5) eingelegt werden, die als Schraub- oder verankerungsteile dienen.

5. Verfahren nach einem oder mehreren der Ansprüche 2 bis 4, **dadurch gekennzeichnet,** daß auf die verformbare Web- oder Strickstoffbahn (4) ein Haftvermittler aufgebracht wird, diese Stoffbahn (4) in Streifen entsprechend den Abmessungen der Rahmenteile geschnitten und in die Form (6, 7) zur Abdeckung der Vliesstoffmaterialstreifen (1, 2) eingebracht wird.

6. Verfahren nach Anspruch 5, **dadurch gekennzeichnet**, daß der Haftvermittler punktförmig verteilt aufgebracht wird.

7. Verfahren nach einem oder mehreren der Ansprüche 1 bis 6, **dadurch gekennzeichnet**, daß der Haftvermittler durch Vernadeln auf das Trennvlies (3) und/oder die Stoffbahn (4) aufgebracht wird.

8. Verfahren nach den Ansprüchen 5 oder 6, **dadurch gekennzeichnet**, daß der Haftvermittler in Form eines Netzes oder einer Folie zwischen die verformbare Stoffbahn (4) und die Vliesstoffmaterialstreifen (1, 2) eingelegt wird.

9. Verfahren nach einem oder mehreren der Ansprüche 1 bis 8, **dadurch gekennzeichnet**, daß eine Beschneidung der Vliesstoffmaterialstreifen (1, 2) auf das Fertigmaß des Rahmens während des Preßvorganges erfolgt.

10. Verfahren nach einem der Ansprüche 1 bis 9, **dadurch gekennzeichnet**, **daß** die Preßform (6, 7) aus kompletten Eckteilen (63) und Längsteilen (61, 62) zusammengesetzt ist.

11. Verfahren nach Anspruch 10, **dadurch gekennzeichnet**, daß die einzelnen Teilformen (61, 62, 63) zur Erzeugung der erforderlichen Wärme für den Preßvorgang mit elektrischen Heizelementen (71) ausgestattet sind, die mit einer Temperaturregelung verbunden sind.

12. Verfahren nach einem der Ansprüche 1 bis 9 oder auch 10,, **gekennzeichnet durch** eine Heizplatte (8), auf die die Preßform (6, 7) aufgesetzt ist und von welcher die Temperatur auf die Preßform (6, 7) übertragen wird.

13. Vorrichtung zur Durchführung des Verfahrens nach Anspruch 9, **dadurch gekennzeichnet,** daß die Preßform (6, 7) Abscherkanten (65) aufweist, durch die das überstehende Material an den den Rahmen begrenzenden Kanten abgetrennt wird.

14. Rahmen für Fenster, Türen oder dergleichen, hergestellt nach dem Verfahren nach Anspruch 2, bei welchem die Außenseiten der Rahmenschenkel (11, 12) mit Web- oder Strickstoff (4) überzogen sind, der mit dem Vliesstoffmaterial (1) fest verbunden ist und in das Vliesstoffmaterial (1) eingebettete Teile (5) eingepreßt sind, die als Schraub- oder Verankerungsteile dienen, **dadurch gekennzeichnet**, daß der Rahmen Befestigungsmittel (5; 52) aufweist, die zur Befestigung des Mechanismus (53, 54, 55) am Rahmen und zur Befestigung des Rahmens an der Wand (9) dienen und daß der Rahmen als Träger und Abdeckung der Mechanismen für Rollos, Fliegenschutz und/oder Vorhangschienen ausgebildet ist.

## Claims

1. A process for producing a frame for windows, doors or the like from a fleece material provided with a hardener, which material is cut into strips according to the dimensions of the frame and is assembled in a mould to form the desired frame, the strips of fleece material being arranged to overlap at the corners, and the frame structure formed thereby is compacted by pressing under the effect of heat in such a manner that a constant thickness of the frame is achieved at the points where strip portions have been additionally laid on, **characterised in that** a separating fabric (3) is laid between the strips of fleece material (1, 2) and the mould (6, 7), and is connected to the strips of fleece material but prevents adhesion to the mould.

2. A process in accordance with claim 1, **characterised in that** a deformable web of woven or knitted material (4) is laid as a separating fabric (3) between the strips of fleece material (1, 2) and the mould (6, 7).

3. A process in accordance with claim 1 or 2, **characterised in that** in order to reinforce the frame, additional strips of fleece material (1a) are laid on at any points.

4. A process in accordance with one or more of claims 1 to 3, **characterised in that** parts (5) are inserted into the fleece material (1, 2) prior to pressing, and act as screw parts or anchoring parts.

5. A process in accordance with one or more of claims 2 to 4, **characterised in that** a bonding agent is applied to the deformable web of woven or knitted material (4), and the said web of material (4) is cut into strips according to the dimensions of the parts of the frame and is introduced into the mould (6, 7) to cover the strips of fleece material (1, 2).

6. A process in accordance with claim 5, **characterised in that** the bonding agent is applied in spaced localised regions.

7. A process in accordance with one or more of claims 1 to 6, **characterised in that** the bonding agent is applied by needling on to the separating fabric (3) and/or the material web (4).

8. A process in accordance with claim 5 or 6, **characterised in that** the bonding agent is inserted in the form of a net or a film between the deformable material web (4) and the strips of fleece material (1, 2).

9. A process in accordance with one or more of claims 1 to 8, **characterised in that** the strips of fleece material (1, 2) are trimmed to the finished size of the frame during the pressing process.

10. A process in accordance with one of claims 1 to 9, **characterised in that** the pressing mould (6, 7) is made up of complete corner parts (63) and longitudinal parts (61, 62).

11. A process in accordance with claim 10, **characterised in that** the individual parts (61, 62, 63) of the mould are fitted with electric heating members (71) to produce the necessary heat for the pressing process, the said members being connected to a temperature control means.

12. A process in accordance with one of claims 1 to 9, or 10, **characterised by** a heating plate (8) on which the pressing mould (6, 7) is placed and from which the temperature is transferred to the pressing mould (6, 7).

13. A device for carrying out the process in accordance with claim 9, **characterised in that** the pressing mould (6, 7) has shearing edges (65) by means of which the material projecting on the delimiting edges of the frame is cut off.

14. A frame for windows, doors or the like, produced by the process in accordance with claim 2, in which frame the outer sides of the limbs (11, 12) of the frame are covered with woven or knitted material (4) which is firmly connected to the fleece material (1), and embedded parts (5) are pressed into the fleece material (1) and act as screw parts or anchoring parts, **characterised in that** the frame has securing means (5; 52) which are used to secure the mechanism (53, 54, 55) on to the frame and to secure the frame on to the wall (9), and the frame is formed as a support and a cover for the mechanisms of window blinds, fly screens and/or curtain tracks.

## Revendications

1. Procédé pour la fabrication d'un cadre pour fenêtre, porte ou huisserie analogue, en une matière constituée d'une nappe fibreuse associée à un agent de durcissement, en utilisant cette matière sous forme de bandes découpées suivant les dimensions du cadre à réaliser, et en disposant d'abord ces bandes dans un moule prévu pour la mise en forme du cadre voulu, ces bandes de matières fibreuses étant ainsi superposées à l'endroit des coins du cadre à réaliser, après quoi on traite à chaud à la presse cette ébauche de cadre constituée par les bandes juxtaposées pour obtenir un cadre en matière compacte qui présente une épaisseur uniforme aux endroits garnis de morceaux supplémentaires de bandes de matière, caractérisé en ce qu'on interpose aussi entre les bandes de nappes de matière fibreuse (1,2) et les parties correspondantes (6,7) du moule une nappe fibreuse de séparation (3) qui empêche un collage sur ces parties du moule, cette nappe de séparation étant liée aux bandes de nappe de matière fibreuse.

2. Procédé selon la revendication 1, caractérisé en ce qu'on utilise comme nappe fibreuse de séparation (3), à disposer entre les bandes de nappe de matière fibreuse (1,2) et les parties correspondantes (6,7) du moule, une bande de matière déformable, tissée ou tricotée (4).

3. Procédé selon la revendication 1 ou 2, caractérisé en ce qu'on dispose en certains endroits choisis à volonté des parties supplémentaires (1a) d'une bande de matière fibreuse pour renforcer localement le cadre.

4. Procédé selon l'une au moins des revendications 1 à 3, caractérisé en ce qu'on insère dans la matière fibreuse des bandes (1,2), avant leur traitement à la presse, des éléments rapportés (5) prévus pour constituer des points de vissage ou d'ancrage.

5. Procédé selon l'une au moins des revendications 2 à 4, caractérisé en ce que l'on dépose un agent adhésif sur la bande déformable de séparation (4), on découpe cette bande de séparation en morceaux, suivant les dimensions des parties concernées du cadre à réaliser, et on place ces morceaux de bande de séparation (4) dans le moule (6,7), pour recouvrir les bandes de nappe de matière fibreuse (1,2).

6. Procédé selon la revendication 5, caractérisé en ce que l'on dépose l'agent adhésif par points séparés régulièrement répartis.

7. Procédé selon l'une au moins des revendications 1 à 6, caractérisé en ce que l'on dépose l'agent adhésif sur la nappe fibreuse de séparation (3) et/ou sur la bande de matière (4) en opérant par piquage à l'aiguille.

8. Procédé selon la revendication 5 ou 6, caractérisé en ce que l'on insère l'agent adhésif entre la bande de matière déformable (4) et les bandes de nappe de matière fibreuse (1,2) sous la forme d'une résille ou d'une feuille mince.

9. Procédé selon l'une au moins des revendications 1 à 8, caractérisé en ce que, pendant la mise en forme à la presse, on effectue un découpage des bandes de nappe de matière fibreuse (1,2) pour les mettre aux cotes définitives du cadre à réaliser.

10. Procédé selon l'une des revendications 1 à 9, caractérisé en ce que les pièces de forme (6,7) du moule sont constituées par un assemblage de pièces complètes (63) pour la mise en forme des coins, et des pièces allongées (61, 62) pour les côtés.

11. Procédé selon la revendication 10, caractérisé en ce que les diverses parties (61, 62, 63) du moule sont pourvues d'organes de chauffage électrique (71), reliés à un régulateur de température, afin d'y produire la chaleur nécessaire pour le traitement à la presse.

12. Procédé selon l'une des revendications 1 à 9 ou encore 10, caractérisé en ce qu'on opère avec une plaque chauffante (8) placée sur les parties du moule, pour les mettre en température.

13. Dispositif pour mettre en oeuvre le procédé selon la revendication 9, caractérisé en ce que les parties (6,7) du moule de mise en forme à la presse présentent des lèvres de découpage (65), pour assurer la séparation de la matière en excès sur les bords du cadre.

14. Cadre pour fenêtres, portes ou huisseries analogues, fabriqué suivant le procédé selon la revendication 2, dans lequel on recouvre les faces externes des côtés (11, 12) du cadre avec une matière tissée ou tricotée (4) qui est fixée à la matière fibreuse (1) des bandes correspondantes, en prévoyant des pièces rapportées (5) insérées dans la nappe fibreuse (1) et noyées dans la matière de la nappe fibreuse (1) pour y constituer des points de vissage et d'ancrage, caractérisé en ce que le cadre comporte des organes de fixation (5, 52) qui servent au montage du mécanisme (53, 54, 55) sur le cadre et au montage du cadre sur le mur (9), et en ce que le cadre est prévu pour porter et recouvrir les mécanismes de manoeuvre de rouleaux de stores, de moustiquaires et/ou de rails de rideaux.
